# EUROPEAN PATENT SPECIFICATION

(11) **EP 0 371 523 B1**
(45) Date of publication and mention of the grant of the patent: **24.03.1993**
(21) Application number: 89202628.7
(22) Date of filing: 17.10.1989
(51) Int. Cl.: B60J 7/043

(54) **Open roof construction for a vehicle**
Schiebehebedachkonstruktion für ein Fahrzeug
Construction d'un toit ouvrant pour un véhicule

(30) Priority: 17.10.1988 NL 8802552
(43) Date of publication of application: 06.06.1990
(73) Proprietor: Vermeulen-Hollandia Octrooien II B.V., NL-2031 EA Haarlem (NL)
(72) Inventor: Huyer, Johannes Nicolaas, NL-1991-BN Velserbroek (NL)
(74) Representative: de Vries, Johannes Hendrik Fokke

(56) References cited:
- EP-A- 0 154 759
- EP-A- 0 187 398
- GB-A- 2 133 750

## Description

The invention relates to an open roof construction for a vehicle according to the preamble of claim 1.

Open roof constructions are known in various embodiments, particularly for passenger cars. A requirement for these open roof constructions, which become more and more important, is a tight locking of the panel in its closed position. This locking serves as protection against burglary on the one hand and for urging the panel tightly into the sealing rubbers in order to obtain a very good sealing action on the other hand.

EP-A-0 154 759 discloses an open roof construction showing the features of the preamble of claim 1. It includes a catching device at the rear of the panel for assisting the set-out mechanism in the lower part of the pivoting movement of the panel.

For this purpose the open roof construction according to the invention is characterized by the features of the characterizing part of claim 1.

Further developments of the invention are defined in claims 2-6.

This latter feature guarantees a faultless operation of the locking means, while springs and the like, which can give rise to failures, are not required since especially the operation of the front locking means is effective in a positive forced manner.

The invention will hereafter be elucidated with reference to the drawing showing an embodiment of the open roof construction according to the invention by way of example.

Fig. 1 is a schematic perspective view of an open roof construction according to the invention.

Fig. 2 is an enlarged exploded view of a part of the open roof construction of fig. 1, wherein the operating mechanism is shown.

Fig. 3-6 are very schematic longitudinal sectional views of the open roof construction of fig. 1 on an enlarged scale and in several positions.

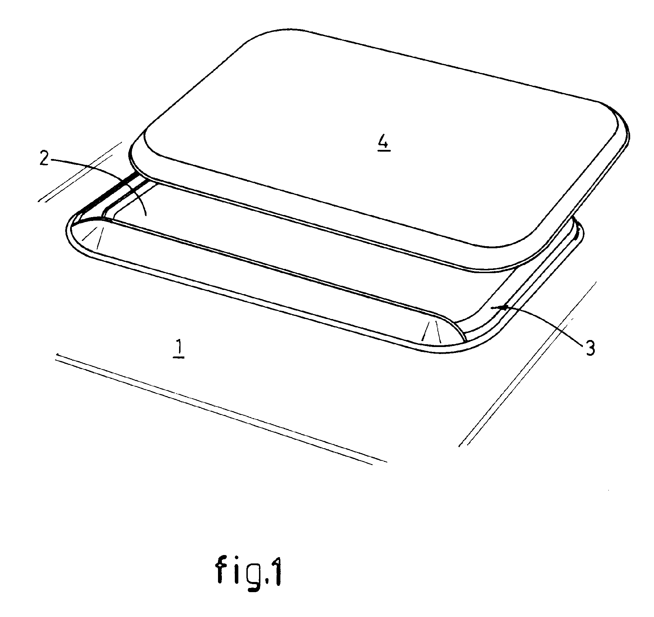

The drawing and first of all fig. 1, shows an embodiment of the open roof construction for a vehicle, in particular a truck, having an opening 2 provided in the fixed roof 1. The open roof construction comprises a frame 3 attached to the fixed roof 1 of the vehicle, the frame 3 movably supporting a rigid panel 4 in a manner to be discribed in further detail.

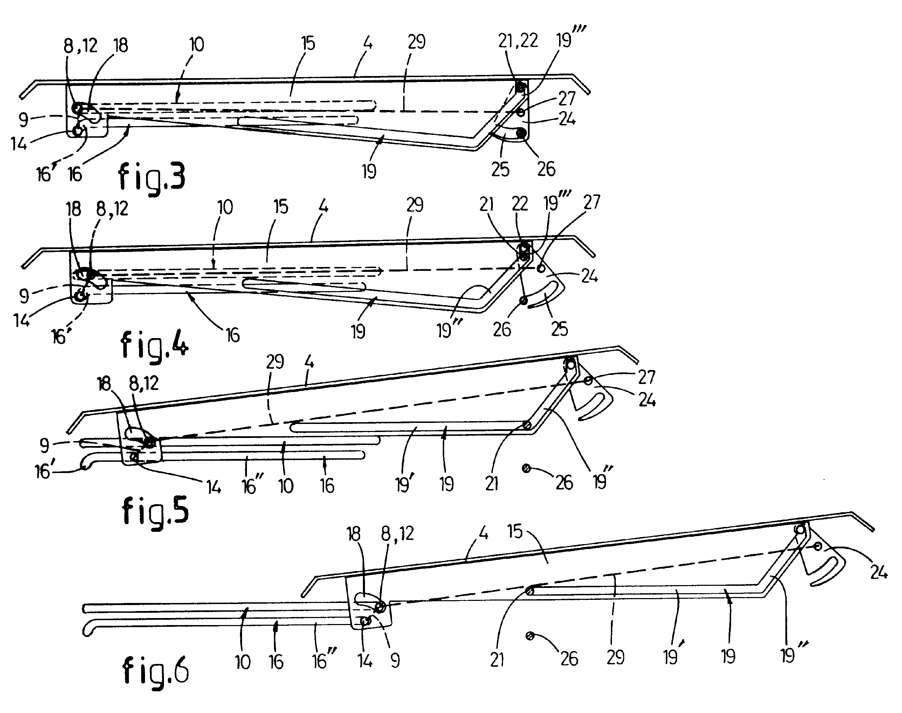

The panel 4 closes the opening 2 in the fixed roof 1 in its closed position and is movable from this closed position (fig. 3) in a backwardly and upwardly inclined position partially above fixed roof 1, such as shown in fig. 1. From this completely or partially opened position the panel 4 may, of course, be moved in reversed sense to the closed position.

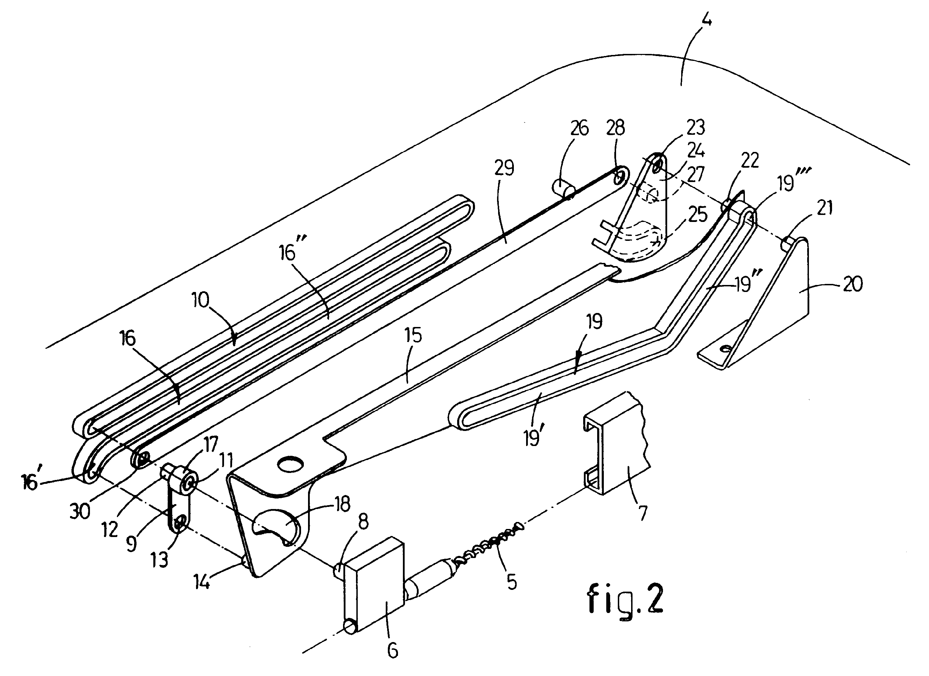

Fig. 2 shows the operation mechanism of the open roof construction according to the invention. This operation mechanism which is in principle, provided on both longitudinal sides of the roof opening 2, comprises a flexible pull and push cable 5 serving as drive means and being driven in a usual way by a manual or electric drive. On the free end of the pull and push cable 5 as shown there is fixed a slide piece 6 slidably guided in longitudinal direction of the vehicle in a guide section 7 formed on the frame 3.

The slide piece 6 is provided with a transverse horizontal pin 8 projecting outwardly and being guided through an intermediate part 9 in a horizontal closed longitudinal slot 10 formed to the stationary frame 3. The longitudinal slot 10 determines the end positions of the pull and push cable 5 and thereby of the panel 4.

Said intermediate part 9 is formed as an arm being pivotable at the upper end about the pin 8 of the slide piece 6. For this purpose the arm 9 has at its upper end a hole 11 for rotatably receiving the pin 8 on the one hand and a slide pin 12 aligned with the hole 11 and projecting into the longitudinal slot 10 on the other hand. At the lower end of the arm 9 there is provided a round hole 13 through which a transverse pin 14 is passed. This transverse pin 14 is connected to a section part 15 being attached to the lower side of the panel 4 in the neighbourhood of the longitudinal edge thereof. The arm 9 is pivotable about the transverse pin 14 projecting into a guide slot 16 after having passed through the hole 13 in the arm 9. This guide slot 16 which is formed under the longitudinal slot 10 of the frame 3, extends substantially horizontal and parallel to the longitudinal slot 10 that has at its front end a downwardly curved portion 16′ joining the horizontal portion 16˝. The guide slot 16 terminates on the front end substantially at the same point as the longitudinal slot 10.

The arm 9 has at its upper end concentrically around the hole 11 a cam 17 which is passed with play through a slot 18 being formed in the section 15 and having the shape of a circular section, the center of curvature coinciding with the axis of the transverse pin 14 on the section 15 in order to permit pivoting movements of the arm 9.

As part of the set out mechanism for the panel 4 there is provided a guide slot 19 in the section 15 of the panel 4, a transverse stationary guide pin 21, which is attached to a support 20 of the frame 3, engaging rotatably and slidably into said guide slot 19. The guide slot 19 includes, as seen in the fully opened position of the panel 4, a horizontal front portion 19′, a backwardly and upwardly inclined portion 19˝ joining to the rear end thereof and a short locking portion 19‴ joining to the rear end of the second portion. This short locking portion 19‴ of the guide slot 19 extends vertically when the panel 4 is in its closed position (see fig. 3).

Substantially aligned with the locking portion 19‴ of the guide slot 19, but on the other side of the section 15 of the panel 4 there is provided a pivot pin 22. This pivot pin 22 projects into a hole 23 in a locking means 24 thereby being permitted to pivot about the pivot pin 22. A locking means 24 has in its lower portion facing away from the hole 23 a curved locking slot 25 being open at its front end and with which a stationary locking pin 26 rigidly connected to the frame 3 can come into engagement through the open front end thereof. The center of curvature of the locking slot 25 does not coïncide with the axis of the hole 23 of the locking means serving as pivot. Contrary thereto, the distance between the locking slot 25 and the hole 23 decreases from the open end of the locking slot 25.

In the portion of the locking means between the hole 23 and locking slot 25 there is further formed a transverse pin 27 projecting pivotally into a hole 28 near the rear end of a connection rod 29. At the front end the connection rod 29 engages with a hole 30 about the slide pin 12 of the arm 9 so that the connection rod 29 actually connects the pull and push cable 5 with the locking means 24.

The operation of the open roof construction according to the invention will now be elucidated with reference to fig. 3-6.

Fig. 3 shows the open roof construction in the closed position of the panel 4, in which the panel 4 is tightly locked. The pull and push cable 5 (not shown) is in the foremost position wherein the slide pin 12 abuts the front end of the longitudinal slot 10. The transverse pin 14 engages the lower front end of the front slot portion 16′ and is kept in engagement through the arm 9 between the pins 8 and 12 and the transverse pin 14. The vertical distance between the front end of the longitudinal slot 10 and the lower front end of the slot portion 16′ is such that, in the foremost position of the slide pin 12 in the longitudinal slot 10, the arm 9 extends substantially vertically. The transverse pin 14 and thereby the section part 15 and the front part of the panel 4 are, as a consequence thereof, locked in horizontal direction as well as in vertical direction. Near the rear end of the panel 4 the locking means 24 is in its maximally forwardly pivoted position wherein the locking pin 26 is in engagement with the rear end of the locking slot 25. The guide pin 21 connected to the frame 3 abuts the upper end of the locking portion 19‴ of the guide slot 19. In this manner the rear portion of the panel 4 is locked in horizontal and vertical direction in the closed position.

In fig. 4 the pull and push cable 5 (not shown) and consequently the pin 8 and the slide pin 12 are moved a small distance backwardly. The section part 15 and the panel 4 are not displaced in horizontal direction as a result of the horizontal locking by the locking pin 21 in the locking portion 19‴ of the guide slot 19 and the transverse pin 14 in the front portion 16′ of the guide slot 16.

Because the pin 8 is moved backwardly, the upper end of the arm 9 is carried along thereby causing the arm 9 to pivot about the transverse pin 14 and releasing the downward pressure of the arm 9 onto the transverse pin 14. Thereafter the transverse pin 14 starts to move upwardly into the slot portion 16′ and to displace the front edge of the panel 4 upwardly. The locking means 24 near the rear edge of the panel 4 is pivoted backwardly about the pivot pin 2 by the connection rod 29 connected to the pin 8. As a consequence of the fact that the center of curvature of the locking slot 25 does not coïncide with the axis of the pivot pin 22, the rear edge of the panel 4 is caused to move in vertical direction, that is upwardly, upon a relative displacement of the locking pin 26 through the locking slot 25. In fig. 4, the rear edge of the panel 4 is moved upwardly to such an extent that the guide pin 21 has reached the transition between the slot portions 19‴ and 19˝ of the guide slot 19. The locking pin 26 has just left the locking slot 25 in the locking means 24.

Fig. 5 illustrates the position of the panel 4 in which the pull and push cable 5 and consequently the pins 8 and 12 are moved a substantial distance backwardly. Upon this horizontal backward displacement of the pin 8 the transverse pin 14 is pulled out of the downwardly curved front portion 16′ of the guide slot 16 by the pivotable arm 9, thereby moving the front edge of the panel 4 upwardly. The position of the pins 8, 12 and 14 with respect to each other is determined and retained by the ratio of the effective length of the arm 9 and the center distance between the horizontal slot 10 and 16′. As a result thereof the pull and push cable 5 and the panel 4 are locked relative to each other in horizontal direction.

Due to the backward displacement of the panel 4 and the section part 15 the guide slot 19 moves relative to the guide pin 21 so that the guide pin 21 passes through the slot portion 19˝. The course of the slot portion 19˝ causes the rear edge of the panel 4 to move upwardly due to the engagement of the guide pin 21 and the slot portion 19˝. In the position of the panel 4 according to fig. 5 the guide pin 21 is at the transition between the slot portions 19′ and 19˝.

Fig. 6 shows the panel 4 in its hindmost completely opened position. There the panel 4 has been moved a distance backwardly with respect to the position of fig. 5, but has been maintained in the same tilting position, since the slots 10, 16˝ and 19′ are horizontal. In the completely opened position the panel 4 extends partially above the fixed roof 1 of the vehicle (see fig. 1).

The operation to move the panel 4 to the closed position is effected in the same manner as opening the panel 4 on the understanding that the movements take place in reverse sense. The panel 4 is therewith urged in vertical direction tightly into sealing rubbers (not shown) on the front and rear side and is locked there.

The invention is not restricted to the embodiment described herein before and shown in the drawing by way of example, which can be varied in different ways within the scope of the invention as long as it is defined in the claims.

The embodiment of the open roof construction shown by way of example is particularly adapted for use in trucks and the like since the maximum built-in height there is not of great importance and the open roof construction is therefore designed for optimal operation and locking of the panel without being limited by a small maximum built-in height.

## Claims

1. Open roof construction for a vehicle having an opening (2) in its fixed roof, comprising
a frame (3) adapted to be fitted to the vehicle;
a panel (4) supported by the frame (3) and having a front and rear side, said panel closing the opening in the fixed roof in its closed position and being adapted to be set from the closed position into upwardly and rearwardly inclined positions in which the panel is displaced rearwardly above the fixed roof;
a set-out mechanism (19-21) for moving the panel (4), provided between the panel and the frame and being adjustable by a drive means (5, 6);
rear locking means (23-28) provided near the rear side of the panel (4) for urging the rear side of the panel (4) downwardly into the closed position where it is locked;
front locking means provided near the front side of the panel (4) and being operated by the drive means (5, 6) for urging the front side of the panel (4) downwardly into the closed position where it is locked;
retaining means between the panel and the front locking means preventing horizontal displacement of the panel in its closed position while allowing displacement of the drive means, and preventing a relative displacement of the drive means and the panel in more or less opened positions of the panel,
**characterized** in that said retaining means and front locking means are combined and comprise a pivotable arm (9) linked through a first pin (8) to the horizontally displaceable drive means (6) on the one hand and linked to the panel (4) through a second pin (14) on the other hand, said second pin (14) being guided in a horizontal longitudinal slot (16) having an horizontal slot portion extending at a distance below the horizontal path of pin (8) of the drive means (6) which is smaller than the distance between said first and second pins (8) and (14) along the arm (9), the longitudinal slot (16) including at the front end a downwardly extending front portion (16′) of which the front end it at a distance from the first pin (8) of the panel (4) which is substantially equal to the distance between the first and second pins (8) and (14).

2. Open roof construction according to claim 1, wherein the downwardly extending slot portion (16′) of the guide slot (16) is curved downwardly.

3. Open roof construction according to claim 1 or 2, comprising means for effecting a positive and forced operation of the rear locking means (23-28) by the drive means (5, 6), including a connection rod (29), the rear end thereof engaging the locking means (23-28) and the front end thereof being connected to the drive means (5, 6).

4. Open roof construction according to claim 1, 2 or 3, wherein the rear locking means (24) is connected to the panel (4) in a manner pivotable about a horizontal pivot pin (22) and comprising a locking slot (25) opened at a front end, in which there can engage a stationary locking pin (26) formed on the frame (3), the locking slot (25) being configured such that the rear side of the panel (4) is moved in vertical direction upon a relative displacement of the locking pin (26) in the locking slot (25).

5. Open roof construction according to one of the preceding claims, wherein the set-out mechanism of the panel comprises a stationary guide pin (21) attached to the frame (3, 20) and being slidably in engagement in a second guide slot (19) formed to the panel (4) and extending at least partially in vertical height.

6. Open roof construction according to claim 5, wherein the guide slot (19) of the panel (4) comprises, as seen in the closed position of the panel, a substantially vertical locking portion (19‴) for horizontally locking the panel (4) in the closed position.

## Patentansprüche

1. Schiebedachkonstruktion für ein Fahrzeug mit einer Öffnung (2) in einem festen Dach (1), wobei die schiebedachkonstruktion versehen ist mit:
einem Rahmen (3), welcher dazu geeignet ist, an dem Fahrzeug befestigt zu werden;
einem auf dem Rahmen (3) abgestützten schiebedachdeckel (4), welcher eine vordere und eine hintere Seite aufweist, wobei der schiebedachdeckel die in dem festen Dach ausgebildete Öffnung in seiner geschlossenen Stellung verschließt und derart gestaltet ist, daß er ausgehend von der geschlossenen Stellung in eine nach oben und nach hinten geneigte Stellung verschoben werden kann, in welcher der Schiebedachdeckel nach hinten über das feste Dach verlagert ist;
einem Öffnungsmechanismus (19-21) zum Bewegen des Schiebedachdeckels (4), wobei der Öffnungsmechanismus zwischen dem Schiebedachdeckel und dem Rahmen vorgesehen ist und mittels einer einstellbaren Antriebseinrichtung (5,6) einstellbar ist;
einer hinteren Verriegelungseinrichtung (23-28), welche in der Nähe der hinteren Seite des Schiebedachdeckels (4) vorgesehen ist, um die hintere Seite des Schiebedachdeckels (4) nach unten in die geschlossene Position zu bewegen, in welcher dieser verriegelt ist;
einer vorderen Verriegelungseinrichtung, welche in der Nähe der vorderen Seite des Schiebedachdeckels (4) vorgesehen ist und mittels der Antriebseinrichtung (5,6) betätigt wird, um die Vorderseite des Schiebedachdeckels (4) nach unten in die geschlossene Position zu bewegen, in welcher dieser verriegelt ist;
einer Festhalteeinrichtung, welche zwischen dem Schiebedachdeckel und der vorderen Verriegelungseïnrichtung vorgesehen ist, um eine Horizontalverschiebung des Schiebedachdeckels in seiner geschlossenen Stellung zu unterbinden, während eine Verlagerung der Antriebseinrichtung möglich ist, und zum Verhindern einer Relativbewegung der Antriebseinrichtung relativ zu dem Schiebedachdeckel in der mehr oder weniger geöffneten Stellung des Schiebedachdeckels, dadurch gekennzeichnet, daß die Festhalteeinrichtung und die vordere Verriegelungseinrichtung miteinander kombiniert sind und einen schwenkarm (9) aufweisen, welcher einerseits mittels eines ersten Gelenkbolzens (8) an der horizontal verschiebbaren Antriebseinrichtung (6) gelenkig gelagert ist und andererseits an dem schiebedachdeckel (4) gelenkig mittels eines zweiten Gelenkbolzens (14) angelenkt ist, wobei der zweite Gelenkbolzen (14) in einer langgestreckten Horizontalnut (16) mit einem horizontal verlaufenden Nutteil geführt ist, welcher sich in einem Abstand unterhalb des horizontalen Wegs des Gelenkbolzens (8) der Antriebseinrichtung (6) erstreckt, wobei dieser Abstand kleiner als der Abstand zwischen dem ersten Gelenkbolzen (8) und dem zweiten Gelenkbolzen (14) entlang des Schwenkarms (9) ist und die langgestreckte Horizontalnut (16) an ihrem vorderen Ende einen sich nach unten erstreckenden Frontteil (16′) aufweist, dessen vorderes Ende in einem Abstand zu dem ersten Gelenkbolzen (8) des Schiebedachdeckels (4) angeordnet ist, welcher im wesentlichen gleich dem Abstand zwischen dem ersten Gelenkbolzen (8) und dem zweiten Gelenkbolzen (14) ist.

2. Schiebedachkonstruktion nach Anspruch 1, wobei der sich nach unten erstreckende Nutteil (16′) der Führungsnut (16) nach unten gekrümmt verläuft.

3. Schiebedachkonstruktion nach Anspruch 1 oder 2, wobei eine Einrichtung vorgesehen ist, welche eine positive und mit Kraft bewirkte Betätigung der hinteren Verriegelungseinrichtung (23-28) mittels der Antriebseinrichtung (5,6) bewerkstelligt, wobei die Einrichtung mit einer Verbindungsstange (29) versehen ist, deren hinteres Ende mit der Verriegelungseinrichtung (23-28) im Eingriff steht und deren vorderes Ende mit der Antriebseinrichtung (5,6) verbunden ist.

4. Schiebedachkonstruktion nach Anspruch 1, 2 oder 3, wobei die hintere Verriegelungseinrichtung (24) in einer um einen Horizontal-Gelenkbolzen (22) schwenkbaren Weise mit dem schiebedachdeckel (4) verbunden ist, und einen am vorderen Ende geöffneten Verriegelungsschlitz (25) aufweist, in welchen ein stationärer Verriegelungsbolzen (26) eingreifen kann, welcher an dem Rahmen (3) ausgebildet ist, wobei der Verriegelungsschlitz (25) derart ausgebildet ist, daß die Rückseite des Schiebedachdeckels (4) in vertikaler Richtung aufgrund einer Relativverschiebung des Verriegelungsbolzens (26) in dem Verriegelungsschlitz (25) bewegt wird.

5. Schiebedachkonstruktion nach einem der vorangehenden Ansprüche, wobei der Öffnungsmechanismus des Schiebedachdeckels einen stationären Führungsstift (21) aufweist, welcher an dem Rahmen (3, 20) befestigt ist und sich gleitverschiebbar mit dem zweiten Führungsschlitz (19) im Eingriff befindet, welcher an dem schiebedachdeckel (4) ausgebildet ist und sich zumindest teilweise in vertikaler Höhenrichtung erstreckt.

6. Schiebedachkonstruktion nach Anspruch 5, wobei der Führungsschlitz (19) des schiebedachdeckels (4) in der geschlossenen Stellung des schiebedachdeckels betrachtet mit einem sich im wesentlichen vertikal erstreckenden Verriegelungsteil (19"′) versehen ist, um den schiebedachdeckel (4) in seiner geschlossenen Stellung in Horizontalrichtung zu verriegeln.

## Revendications

1. Construction de toit ouvrant pour un véhicule ayant une ouverture (2) dans son toit fixe (1), comportant
un bâti (3) destiné à être monté sur le véhicule ;
un panneau (4) supporté par le bâti (3) et ayant un côté avant et un côté arrière, ledit panneau fermant l'ouverture dans le toit fixe dans sa position fermée et étant destiné à être amené de la position fermée jusque dans des positions inclinées vers le haut et vers l'arrière dans lesquelles le panneau est déplacé vers l'arrière au-dessus du toit fixe ;
un mécanisme (19-21) de mise en mouvement destiné à déplacer le panneau (4), disposé entre le panneau et le bâti et pouvant être réglé par des moyens d'entraînement (5, 6) ;
des moyens de verrouillage arrière (23-28) prévus à proximité du côté arrière du panneau (4) pour rappeler le côté arrière du panneau (4) vers le bas jusque dans la position fermée dans laquelle il est verrouillé ;
des moyens de verrouillage avant prévus à proximité du côté avant du panneau (4) et pouvant être manoeuvrés par des moyens d'entraînement (5, 6) pour rappeler le côté avant du panneau (4) vers le bas jusque dans la position fermée dans laquelle il est verrouillé ;
des moyens de retenue entre le panneau et les moyens de verrouillage avant, empêchant un déplacement horizontal du panneau dans sa position fermée tout en permettant un déplacement des moyens d'entraînement, et empêchant un déplacement relatif des moyens d'entraînement et du panneau dans des positions plus ou moins ouvertes du panneau,
caractérisée en ce que lesdits moyens de retenue et les moyens de verrouillage avant sont combinés et comprennent un bras pivotant (9) relié par un premier axe (8) au moyen d'entraînement (6) pouvant être déplacé horizontalement, d'une part, et relié au panneau (4) par un second axe (14), d'autre part, ledit second axe (14) étant guidé dans une rainure longitudinale horizontale (16) ayant une partie de rainure horizontale s'étendant à une certaine distance au-dessous du trajet horizontal de l'axe (8) du moyen d'entraînement (6) qui est plus faible que la distance entre lesdits premier et second axes (8 et 14) le long du bras (9), la rainure longitudinale (16) comprenant, à l'extrémité avant, une partie avant (16′) s'étendant vers le bas dont l'extrémité avant se trouve à une distance du premier axe (8) du panneau (4) qui est sensiblement égale à la distance entre les premier et second axes (8 et 14).

2. Construction de toit ouvrant selon la revendication 1, dans laquelle la partie de rainure (16′) s'étendant vers le bas de la rainure (16) de guidage est incurvée vers le bas.

3. Construction de toit ouvrant selon la revendication 1 ou 2, comportant des moyens destinés à réaliser une manoeuvre positive et forcée des moyens de verrouillage arrière (23-28) par les moyens d'entraînement (5, 6), comprenant une biellette (29) dont l'extrémité arrière est enclenchée avec les moyens de verrouillage (23-28) et dont l'extrémité avant est reliée aux moyens d'entraînement (5, 6).

4. Construction de toit ouvrant selon la revendication 1, 2 ou 3, dans laquelle les moyens de verrouillage arrière (24) sont reliés au panneau (4) d'une manière pouvant pivoter autour d'un axe horizontal (22) de pivot et comprenant une rainure (25) de verrouillage ouverte à une extrémité avant, dans laquelle peut s'engager un axe fixe (26) de verrouillage formé sur le bâti (3), la rainure (25) de verrouillage étant configurée de manière que le côté arrière du panneau (4) soit déplacé dans une direction verticale à la suite d'un déplacement relatif de l'axe (26) de verrouillage dans la rainure (25) de verrouillage.

5. Construction de toit ouvrant selon l'une des revendications précédentes, dans laquelle le mécanisme de mise en mouvement du panneau comprend un axe fixe (21) de guidage fixé au bâti (3, 20) et pouvant s'engager en coulissant dans une seconde rainure (19) de guidage formée sur le panneau (4) et s'étendant au moins partiellement en hauteur verticale.

6. Construction de toit ouvrant selon la revendication 5, dans laquelle la rainure (19) de guidage du panneau (4) comporte, telle que vue dans la position fermée du panneau, une partie sensiblement verticale (19"′) de verrouillage pour le verrouillage horizontal du panneau (4) dans la position fermée.
